# FASCICULE DE BREVET EUROPEEN

(11) **EP 1 961 658 B1**
(45) Date de publication et mention de la délivrance du brevet: **26.08.2009**
(21) Numéro de dépôt: 08001304.8
(22) Date de dépôt: 24.01.2008
(51) Int. Cl.: B64C 27/473

(54) **Pale de giravion pourvue d'un tronçon radial et d'au moins un tronçon en fléche avant et/ou arrière**
Rotorblatt versehen mit einem Radialabschnitt und mindestens einem gepfeilten Abschnitt vorher und/oder hinterher
Rotor blade provided with radial section and at least one arrowed section before and/or after

(30) Priorité: 23.02.2007 FR 0701299
(43) Date de publication de la demande: 27.08.2008
(73) Titulaire: EUROCOPTER, 13725 Marignane Cédex (FR)
(72) Inventeur: Rochegude, Bernard, 13700 Marignane (FR); Hirsch, Jean-François, 535, Avenue de Brédasque 13090 Aix en Provence (FR)
(74) Mandataire: Pouillot, Laurent Pierre Paul

(56) Documents cités:
- EP-A1- 1 557 354
- FR-A1- 2 252 916
- GB-A- 625 778
- US-A- 2 734 586

## Description

La présente invention concerne une pale de giravion qui est pourvue d'un tronçon radial au niveau de son pied de pale puis d'au moins un tronçon en flèche avant et/ou arrière.

Il convient de noter que la flèche d'une surface aérodynamique permet de déterminer l'orientation de cette surface par rapport à son sens d'avancement.

Ainsi, un tronçon en flèche avant d'une pale est dirigée vers le sens d'avancement de cette pale, alors qu'un tronçon en flèche arrière est lui dirigé dans le sens opposé au sens d'avancement.

On en déduit aisément qu'un tronçon radial, dénommé à flèche nulle par commodité, est perpendiculaire au sens d'avancement de la pale. Un tel tronçon radial d'une pale d'un rotor principal d'hélicoptère est ainsi dirigé selon le rayon de référence de ce rotor d'où sa dénomination.

On dénommera donc dans la suite du texte « tronçon radial» un tronçon à flèche nulle, et, « tronçon en flèche » un tronçon présentant une flèche avant et/ou arrière.

On connaît par le document FR 2865189, une pale de giravion qui possède successivement, en partant du pied de la pale, un tronçon radial, et donc à flèche nulle, un tronçon à flèche avant puis une tronçon à arrière.

Une pale de ce type est particulièrement intéressante dans la mesure où, de part sa géométrie, elle réduit sensiblement la signature acoustique du rotor qu'elle équipe, tout en préservant ses caractéristiques dynamiques et aérodynamiques.

Néanmoins, pour assurer la résistance mécanique de cette pale, il convient en particulier d'une part, de reprendre les efforts centrifuges exercés sur la pale et, d'autre part, d'assurer la tenue du bord d'attaque de la pale aux impacts.

Classiquement, une pale comporte :
- au moins un longeron rigide, à base principalement de fibres minérales unidirectionnelles ou de métal, qui supporte les efforts centrifuges et les transmets au moyeu du giravion,
- des revêtements d'intrados et d'extrados qui assurent la raideur, en battement et en traînée, ainsi que la tenue en torsion de la pale en étant par exemple composés de tissus bidirectionnels à base de fibres minérales, et
- au moins un caisson de remplissage pour garantir la continuité géométrique de l'ensemble et la stabilité des revêtements d'intrados et d'extrados.

On connaît un premier type de pale équipé d'un longeron, qui à partir du pied de la pale et notamment à partir des attaches de cette pale au moyeu s'étend le long de son envergure, agencé au niveau du bord d'attaque de la pale. On nommera ce type de longeron « longeron de bord d'attaque » par commodité dans la suite du texte.

Ce longeron de bord d'attaque est très efficace de façon générale, et de plus protège le bord d'attaque contre les chocs, mais ne semble pas en mesure de répondre aux exigences d'une pale comportant un tronçon radial et un tronçon en flèche avant et/ou arrière.

En effet, sous l'effet de la force centrifuge, une telle pale tend à se « déplier » afin de devenir entièrement droite. Dans ces conditions, le longeron de bord d'attaque s'avérerait insuffisant puisqu'il serait lui aussi susceptible de se déplier dans la mesure où, du fait de son agencement dans le bord d'attaque, il présente aussi un profil en ligne brisée correspondant aux tronçons radial et en flèche avant et/ou arrière.

On connaît un deuxième type de pale muni d'un longeron, depuis le pied de pale et s'étendant le long de l'envergure de la pale, agencé à l'intérieur de la pale. On nommera ce type de longeron « longeron central » par commodité dans la suite du texte.

Par exemple, on retrouve un longeron central dans le document US5127802 qui décrit un longeron tubulaire central en fibres de verre qui est en outre renforcé par des semelles supérieures et inférieures en fibres de carbone.

Ne suivant pas le bord d'attaque de cette pale, un tel longeron central peut être radial, c'est-à-dire dirigé selon le rayon du rotor.

Toutefois, si on utilisait ce longeron sur une pale présentant un tronçon radial et un tronçon en flèche, la position centrale du longeron selon la corde de la pale varierait le long de son envergure. S'il se trouve au milieu de la corde, par exemple, dans le tronçon radial, il va nécessairement se rapprocher du bord de fuite de la pale dans un tronçon en flèche avant. A contrario, il se rapprochera du bord d'attaque dans la zone en flèche arrière.

Par suite, II convient notamment de surdimensionner le longeron dans la zone à flèche avant ce qui entraînera des problèmes de masse mais aussi de centrage de la pale, une pale devant approximativement être centrée au voisinage de son axe de pas.

On connaît un troisième type de pale qui combine à la fois un longeron de bord d'attaque et un longeron central le long de l'envergure de la pale. Le longeron de bord d'attaque est séparé du longeron central par un caisson de torsion dont les parois sont constituées par lesdits longerons et les revêtements d'intrados et d'extrados, comme le montre par exemple le document US5346367.

Cette solution pourrait être séduisante pour une pale munie d'un tronçon radial et d'un tronçon en flèche, mais peut amener des surdimensionnements et des surpoids préjudiciables.

Enfin, on connaît un quatrième type de pale muni d'un longeron dénommé longeron réparti. Un tel longeron consiste en un longeron de bord d'attaque qui est légèrement prolongé par une partie sur l'intrados et l'extrados de la pale.

Plus précisément, le longeron réparti comporte des premières fibres minérales disposées à plat sur la partie avant de l'extrados de la pale et des deuxièmes fibres minérales disposées à plat sur la partie avant de l'intrados. Ces fibres se rejoignent au bord d'attaque de la pale pour constituer un longeron de bord d'attaque classique.

Le longeron réparti répond parfaitement au présent besoin tout évitant une augmentation importante de la masse de la pale.

Toutefois, on se retrouve confronté à la forme en ligne brisée du bord d'attaque d'une pale munie d'un tronçon radial et d'un tronçon en flèche. En effet, la succession d'un tronçon radial et d'au moins un tronçon en flèche avant et/ou arrière entraîne une répartition extrêmement complexe des fibres le long de l'envergure. II en résulte une fabrication délicate qui est difficilement reproductible et surtout automatisable compte tenu du degré de précision exigé pour la réalisation de la pale.

La présente invention a pour objet de proposer une pale, permettant de s'affranchir des limitations mentionnées ci-dessus, à l'aide d'un longeron optimisé en terme de masse et pouvant être fabriqué de façon automatique et reproductible.

Selon l'invention, une pale de giravion est munie successivement, selon l'axe de pas de la pale en allant du pied de la pale qui est fixé au moyeu d'un rotor du giravion vers l'extrémité libre de la pale disposée du côté opposé au moyeu, d'un tronçon radial puis d'un tronçon en flèche, ce tronçon en flèche étant pourvu d'au moins un tronçon à flèche avant et/ou arrière. De plus, la pale comporte un longeron unique issu du pied de pale, les tronçons radial et en flèche ayant chacun un bord d'attaque et un bord de fuite ainsi qu'un extrados et un intrados.

L'invention est remarquable en ce que le longeron unique comporte un longeron radial dans le tronçon radial, puis ce longeron unique se divise au passage du tronçon radial au tronçon en flèche pour former ensuite dans le tronçon en flèche un longeron primaire et un longeron secondaire. Par conséquent, la pale ne possède qu'un longeron unique qui comporte d'une part une partie dans le tronçon radial, à savoir le longeron radial, et deux parties dans le longeron en flèche, plus précisément le longeron primaire et le longeron secondaire.

Il est à noter que l'axe de pas de la pale est un axe de rotation longitudinal autour duquel la pale tourne lors de changement de pas visant à modifier son incidence par rapport à un flux d'air extérieur.

Avantageusement, le longeron unique, comportant des longerons radial, primaire et secondaire, est notamment composé de fibres minérales unidirectionnelles de manière à pourvoir transmettre les efforts centrifuges au moyeu du giravion. Ainsi, les longerons radial et secondaire comportent des fibres unidirectionnelles dirigées selon l'axe de pas et le longeron primaire des fibres unidirectionnelles dirigées parallèlement au bord d'attaque du tronçon en flèche.

De préférence, le longeron radial est agencé dans le bord d'attaque du tronçon radial. Un tel tronçon est donc parfaitement maintenu par rapport au moyeu par ce longeron qui représente dans les faits un longeron de bord d'attaque.

De même, le longeron primaire est agencé dans le bord d'attaque du tronçon en flèche. A contrario, le longeron secondaire est agencé dans une portion centrale du tronçon en flèche, la portion centrale se trouvant entre le bord d'attaque et le bord de fuite du tronçon en flèche.

Par suite, le tronçon en flèche comporte un longeron de bord d'attaque représenté par le longeron primaire qui provient du longeron radial. Toutefois, afin d'éviter tout effet de dépliage, le longeron radial se divise aussi en un longeron central, en l'occurrence le longeron secondaire.

Une telle structure permet donc de parfaitement répondre au problème en ne surchargeant pas exagérément la masse de la pale. De plus, les techniques de fabrication usuelles peuvent être mises en oeuvre ce qui garantit une fabrication à moindre coût.

En effet, il n'est pas utile de surdimensionner le longeron secondaire du fait de la présence du longeron primaire, ce qui évite les inconvénients liés à la masse et au centrage de la pale par exemple.

Selon un premier mode de réalisation, le longeron secondaire a la forme d'une nervure reliant l'extrados à l'intrados. Le longeron secondaire est alors un élément longiligne dont la hauteur s'étend de l'intrados à l'extrados du tronçon en flèche, l'élément longiligne reliant ainsi l'intrados à l'extrados.

Selon un deuxième mode de réalisation, le longeron secondaire comporte un longeron secondaire supérieur disposé à plat sur l'extrados du tronçon en flèche, et/ou un longeron secondaire inférieur disposé à plat sur l'intrados dudit tronçon en flèche. Le longeron secondaire est en fait un longeron réparti selon ce mode de réalisation ce qui permet d'optimiser son agencement, notamment près de l'extrémité libre de la pale où cette dernière présente une faible épaisseur.

En outre, il est utile que le longeron secondaire soit agencé dans l'alignement du longeron radial. Cela revient à dire que le longeron secondaire est disposé dans l'alignement du bord d'attaque du tronçon radial lorsque le longeron radial est un longeron de bord d'attaque.

Ainsi, le longeron radial et le longeron secondaire sont tous deux dirigés selon le même axe, plus précisément l'axe de pas de la pale. Cela augmente efficacement la capacité du longeron à transmettre les efforts centrifuges au rotor.

Par ailleurs, un segment du longeron unique étant composé du longeron radial prolongé par ledit longeron secondaire, ledit segment a une longueur comprise entre 90% et 95% de la longueur totale de la pale. L'épaisseur de la pale en bout de pale étant décroissante, l'utilité du longeron secondaire décroît en bout de pale et il devient en outre plus difficile de l'agencer. Afin d'optimiser la masse de la pale et de ne pas pénaliser la fabrication de cette dernière, le longeron secondaire s'arrête donc avant l'extrémité libre de la pale.

Toutefois selon le besoin, le segment peut éventuellement parcourir l'intégralité de la pale et donc avoir une égale à cette dernière.

Pour améliorer la répartition des masses et transmettre plus efficacement les efforts centrifuges, selon une variante de l'invention, le longeron unique comporte un premier renfort au moins partiel, au niveau de l'extrados de la pale, entre le longeron primaire et le longeron secondaire.

Ce premier renfort permet notamment de couvrir la zone qui ne comporterait pas de longeron secondaire, si ce dernier ne s'étend pas jusqu'au bout de la pale. Toutefois, il est avantageux que ce renfort ne soit pas partiel mais total pour couvrir l'ensemble de la zone séparant le longeron primaire du longeron secondaire.

Le premier renfort est structurellement un longeron destiné uniquement à transmettre les efforts centrifuges. Le premier renfort est en tissus comportant essentiellement des fibres minérales unidirectionnelles, dirigées selon l'axe de la pale et associées évidemment à des résines appropriées, et non pas en tissus sensiblement équilibrés en fibres minérales selon les sens chaîne et trame comme de façon conventionnelle.

De même, le longeron unique comporte un deuxième renfort au moins partiel, au niveau de l'intrados de la pale, entre le longeron primaire et le longeron secondaire. Le deuxième renfort est alors en fibres minérales unidirectionnelles, et non pas sous forme de tissus bidirectionnels, dirigées selon ledit rayon de référence.

Enfin et avantageusement, le tronçon en flèche comporte successivement un tronçon en flèche avant et un tronçon en flèche arrière, la pale ayant ainsi successivement, du pied de pale à son extrémité libre, un tronçon radial puis un tronçon en flèche constitué d'un tronçon en flèche avant puis d'un tronçon en flèche arrière. Cette configuration est efficace pour lutter contre le bruit, et l'invention relative à un longeron unique qui se divise lui est particulièrement bien adaptée.

L'invention et ses avantages apparaîtront avec plus de détails dans le cadre de la description suivante, qui illustre des exemples de réalisation préférés, donnés sans aucun caractère limitatif, en référence aux figures annexées qui représentent :
- la figure 1, une vue schématique d'une pale selon l'invention,
- la figure 2, une vue schématique d'une pale selon une variante de l'invention,
- la figure 3, une coupe du tronçon en flèche selon un premier mode de réalisation, et
- la figure 4, une coupe du tronçon en flèche selon un deuxième mode de réalisation.

Les éléments présents dans plusieurs figures distinctes sont affectés d'une seule et même référence.

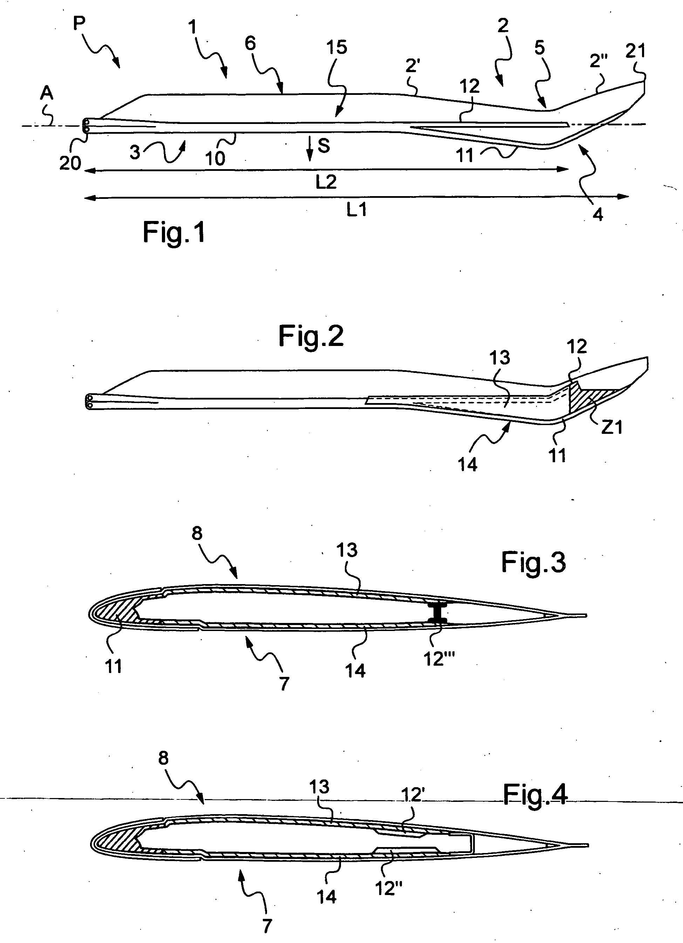

La figure 1 présente une vue schématique d'une pale P de giravion, tel qu'un hélicoptère, selon l'invention.

La pale P est fixée à un moyeu de giravion, non représenté, par son pied de pale 20 pour participer à la sustentation et à la propulsion du giravion.

La pale P comporte successivement, de son pied 20 ou emplanture à son extrémité libre 21 située du côté de la pale P opposé au rotor, un tronçon radial 1 puis un tronçon en flèche 2 muni d'un tronçon en flèche avant 2' et d'un tronçon en flèche arrière 2".

On rappelle, que le tronçon radial 1 est perpendiculaire au sens d'avancement S de la pale. Au contraire, le tronçon en flèche 2 est dirigé vers le sens d'avancement S et/ou dans le sens contraire au sens d'avancement S. Plus précisément, pour l'exemple décrit, le tronçon en flèche avant 2' du tronçon en flèche 2 est dirigé vers ce sens d'avancement S alors que le tronçon en flèche arrière 2" du tronçon en flèche 2 est dirigé dans le sens contraire au sens d'avancement S.

De façon classique, le tronçon radial 1 et le tronçon en flèche 2 comportent chacun un bord d'attaque 3, 4 et un bord de fuite 6, 5. De même, ces tronçons radial 1 et en flèche 2 sont pourvus d'un intrados 7 et d'un extrados 8 comme le montre la coupe de la figure 3.

Par ailleurs, on note que la pale P est à même d'effectuer un mouvement rotatif autour de l'axe de pas A. Cette opération, nommée mise en pas, permet en effet de varier l'incidence de la pale P par rapport au flux d'air qu'elle traverse afin d'augmenter la portance de la pale par exemple ou encore de la diminuer.

En outre, afin de transmettre les efforts centrifuges qu'elle subit au moyeu, la pale P est munie d'un longeron unique, composé de fibres minérales unidirectionnelles dirigées selon l'axe de pas A, partant du pied de pale 20.

Dans le tronçon radial 1, le longeron unique consiste en un longeron radial 10 qui s'étend à partir du pied de pale 20. Ce longeron radial est du type longeron de bord d'attaque dans la mesure où il est agencé au niveau du bord d'attaque 3 du tronçon radial 1.

Par ailleurs, dans le tronçon en flèche 2, le longeron unique possède un longeron primaire 11 et un longeron secondaire 12.

Ainsi, la pale P a un seul longeron unique consistant en un longeron radial 10 qui se divise en un longeron primaire 11 et un longeron secondaire 12 au passage du tronçon radial 1 au tronçon en flèche 2.

Plus précisément, le longeron primaire 11 est un longeron de bord d'attaque agencé au niveau du bord d'attaque 4 du tronçon en flèche 2.

Au contraire, le longeron secondaire 12 est un longeron central. Il est agencé à l'intérieur de la pale en étant disposé d'une part entre l'intrados et l'extrados du tronçon en flèche 2 et, d'autre part, entre le bord d'attaque 4 et le bord de fuite 5 de ce tronçon en flèche. De plus, le longeron secondaire 12 est avantageusement disposé selon l'axe de pas et plus particulièrement selon le bord d'attaque du tronçon radial 1 et donc dans l'alignement du longeron radial 10.

Les efforts centrifuges sont alors repris par le longeron primaire 11 et le longeron secondaire 12, ce dernier empêchant de plus un dépliement de la pale P. Par conséquent, il n'est nullement obligé de surdimensionner le longeron secondaire 12 du fait de la présence du longeron primaire 11.

Ensuite, ces efforts centrifuges sont transmis au longeron radial auquel les longerons primaire 11 et secondaire 12 sont reliés et enfin au moyeu du giravion.

L'épaisseur de la pale à proximité de son extrémité libre 21 étant faible, il n'est pas nécessaire que le longeron secondaire 12 traverse la totalité du tronçon en flèche 2.

La longueur L2 du segment 15 du longeron composé du longeron radial 10 et du longeron secondaire 12 est alors inférieure à la longueur totale L1 de la pale P, cette longueur totale allant du pied de pale 20 à l'extrémité libre 21. De préférence, la longueur L2 est comprise entre 90% à 95% de la longueur totale L1 de la pale P.

La figure 2 présente une variante de l'invention.

La pale P est dans cette variante munie d'un premier renfort 13 sur son extrados et d'un deuxième renfort 14 sur son intrados.

Ces premier et deuxième renforts 13, 14 sont des tissus constitués essentiellement de fibres minérales unidirectionnelles dirigées selon l'axe de pas A et constituent des parties à part entière du longeron unique.

Elles couvrent en totalité l'espace allant du longeron primaire 11 au longeron secondaire 12. Les premier et deuxième renforts 13, 14 sont donc tous deux solidaires du longeron radial 10, du longeron primaire 11 et du longeron secondaire 12.

Ces renforts participent activement à la reprise d'efforts axiaux uniquement, et donc à la transmission des seuls efforts centrifuges exercés sur la pale au moyeu du giravion.

Conformément à une autre variante, la couverture est partielle. Par exemple les renforts ne couvrent que la zone hachurée Z1 pour compenser l'absence de longeron secondaire dans cette zone Z1. Dans cette configuration les premier et deuxième renforts 13, 14 sont uniquement solidarisés à l'extrémité du longeron secondaire 12 et au longeron primaire 11.

La figure 3 présente une coupe d'un tronçon en flèche 2" selon un premier mode de réalisation.

Cette coupe fait notamment apparaître le longeron secondaire 12, le premier renfort 14 disposé au niveau de l'intrados 7 de la pale et le deuxième renfort 13 agencé au niveau de l'extrados 8 de cette pale.

Selon ce premier mode de réalisation, le longeron secondaire 12 est un élément longiligne 12'" en forme de I. Cet élément longiligne est épais, sa hauteur allant de l'intrados 7 à l'extrados 8 de la pale.

La figure 4 présente une coupe d'un tronçon en flèche 2" selon un deuxième mode de réalisation.

Désormais, le longeron secondaire est en quelque sorte un longeron réparti. Par suite, il comporte un longeron secondaire supérieur 12' disposé à plat sur l'extrados 8 du tronçon en flèche 2.

De même, le longeron secondaire 12 est muni d'un longeron secondaire inférieur 12" disposé à plat sur l'intrados 7 du tronçon en flèche 2.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, le longeron radial décrit se sépare en un longeron primaire et un longeron secondaire au niveau du passage du tronçon radial au tronçon en flèche.

Néanmoins, il est envisageable de décaler légèrement cette séparation vers le saumon de la pale d'une distance de l'ordre de 10% de la longueur totale L1de la pale,

## Revendications

1. Pale (P) de giravion munie successivement, selon un axe de pas (A) de la pale (P) allant du pied (20) de la pale fixé à un moyeu d'un rotor du giravion vers une extrémité libre (21) de la palle (P) du côté opposé au dit moyeu, d'un tronçon radial (1) puis d'un tronçon en flèche (2), ledit tronçon en flèche (2) étant pourvu d'au moins un tronçon en flèche avant (2') et/ou arrière (2"), ladite pale (P) comportant en outre un longeron unique issu dudit pied de pale (20), et lesdits tronçons radial (1) et en flèche (2) ayant chacun un bord d'attaque (3, 4) et un bord de fuite (6, 5) ainsi qu'un extrados (8) et un intrados (7),
**caractérisée en ce que** ledit longeron unique comporte un longeron radial (10) dans le tronçon radial (1), puis se divise au passage du tronçon radial (1) au tronçon en flèche (2) pour former ensuite dans le tronçon en flèche (2) un longeron primaire (11) et un longeron secondaire (12).

2. Pale selon la revendication 1,
**caractérisée en ce que** ledit longeron unique est composé de fibres minérales unidirectionnelles.

3. Pale selon la revendication 2,
**caractérisée en ce que** ledit longeron radial et le longeron secondaire comportent des fibres minérales unidirectionnelles dirigées selon l'axe de pas.

4. Pale selon l'une quelconque des revendications 2 à 3,
**caractérisée en ce que** ledit longeron primaire comporte des fibres minérales unidirectionnelles dirigées parallèlement au bord d'attaque dudit tronçon en flèche.

5. Pale selon l'une quelconque des revendications précédentes,
**caractérisée en ce que** le longeron radial (10) est agencé dans le bord d'attaque (3) du tronçon radial (1).

6. Pale selon l'une quelconque des revendications précédentes,
**caractérisée en ce que** ledit longeron primaire (11) est agencé dans le bord d'attaque (4) du tronçon en flèche (2).

7. Pale selon l'une quelconque des revendications précédentes,
**caractérisée en ce que** ledit longeron secondaire (12) est agencé dans une portion centrale du tronçon en flèche (2), ladite portion centrale se trouvant entre le bord d'attaque (4) et le bord de fuite (5) dudit tronçon en flèche (2).

8. Pale selon l'une quelconque des revendications précédentes,
**caractérisée en ce que** ledit longeron secondaire (12) est un élément longiligne dont la hauteur s'étend de l'intrados (7) à l'extrados (8) du tronçon en flèche (2).

9. Pale selon l'une quelconque des revendications précédentes,
**caractérisée en ce que** ledit longeron secondaire (12) comporte un longeron secondaire supérieur (12') disposé à plat sur l'extrados (8) dudit tronçon en flèche (2).

10. Pale selon l'une quelconque des revendications précédentes,
**caractérisée en ce que** ledit longeron secondaire (12) comporte un longeron secondaire inférieur (12") disposé à plat sur l'intrados (7) dudit tronçon en flèche (2).

11. Pale selon l'une quelconque des revendications précédentes,
**caractérisée en ce que** ledit longeron secondaire (12) est agencé dans l'alignement dudit longeron radial (10).

12. Pale selon l'une quelconque des revendications précédentes,
**caractérisée en ce que** ledit longeron secondaire (12) est agencé dans l'alignement du bord d'attaque (3) de la partie radial (1).

13. Pale selon l'une quelconque des revendications précédentes.
**caractérisée en ce que,** un segment (15) du longeron unique étant composé du longeron radial (10) prolongé par ledit longeron secondaire (12), ledit segment (15) a une longueur (L2) comprise entre 90% et 95% de la longueur totale (L1) de la pale (P).

14. Pale selon l'une quelconque des revendications précédentes,
**caractérisée en ce que** ledit longeron unique comporte un premier renfort (13) au moins partiel, au niveau de l'extrados (8) de la pale (P), entre ledit longeron primaire (11) et ledit longeron secondaire (12).

15. Pale selon la revendication 14,
**caractérisée en ce que** ledit premier renfort (13) est en tissus constitués essentiellement de fibres minérales unidirectionnelles dirigées selon ledit axe de pas (A).

16. Pale selon l'une quelconque des revendications précédentes,
**caractérisée en ce que** ledit longeron unique comporte un deuxième renfort (14) au moins partiel, au niveau de l'intrados (7) de la pale (P) entre ledit longeron primaire (11) et ledit longeron secondaire (12).

17. Pale selon la revendication 16,
**caractérisée en ce que** ledit deuxième renfort (14) est en tissus constitués essentiellement de fibres minérales unidirectionnelles dirigées selon ledit axe de pas (A).

18. Pale selon l'une quelconque des revendications précédentes,
**caractérisée en ce que** le tronçon en flèche (2) comporte successivement un tronçon en flèche avant (2') et un tronçon en flèche arrière (2").

## Claims

1. A blade (P) of a rotorcraft provided in succession, along a pitch axis (A) of the blade (P) running from the foot (20) of the blade which is fixed to a hub of a rotor of the rotorcraft towards a free end (21) of the blade (P) on the opposite side from said hub, with a radial section (1) then with a swept-back section (2), said swept-back section (2) being provided with at least one forward (2') and/or rearward (2") swept-back section, said blade (P) furthermore comprising a single spar extending from said foot of the blade (20), and said radial section (1) and swept-back section (2) each having a leading edge (3, 4) and a trailing edge (6, 5) and also an upper surface (8) and a lower surface (7),
**characterised in that s**aid single spar comprises a spar (10) which is radial in the radial section (1), then divides on passing from the radial section (1) to the swept-back section (2) to then form a primary spar (11) and a secondary spar (12) in the swept-back section (2).

2. A blade according to Claim 1, **characterised in that** said single spar is composed of unidirectional mineral fibres.

3. A blade according to Claim 2, **characterised in that** said radial spar and the secondary spar comprise unidirectional mineral fibres directed along the pitch axis.

4. A blade according to any one of Claims 2 to 3, **characterised in that** said primary spar comprises unidirectional mineral fibres directed parallel to the leading edge of said swept-back section.

5. A blade according to any one of the preceding claims, **characterised in that** the radial spar (10) is arranged in the leading edge (3) of the radial section (1).

6. A blade according to any one of the preceding claims, **characterised in that** said primary spar (11) is arranged in the leading edge (4) of the swept-back section (2).

7. A blade according to any one of the preceding claims, **characterised in that** said secondary spar (12) is arranged in a central portion of the swept-back section (2), said central portion being located between the leading edge (4) and the trailing edge (5) of said swept-back section (2).

8. A blade according to any one of the preceding claims, **characterised in that** said secondary spar (12) is an elongate element, the height of which extends from the lower surface (7) to the upper surface (8) of the swept-back section (2).

9. A blade according to any one of the preceding claims, **characterised in that** said secondary spar (12) comprises an upper secondary spar (12') arranged flat on the upper surface (8) of said swept-back section (2).

10. A blade according to any one of the preceding claims, **characterised in that** said secondary spar (12) comprises a lower secondary spar (12") arranged flat on the lower surface (7) of said swept-back section (2).

11. A blade according to any one of the preceding claims, **characterised in that** said secondary spar (12) is arranged in the alignment of said radial spar (10).

12. A blade according to any one of the preceding claims, **characterised in that** said secondary spar (12) is arranged in the alignment of the leading edge (3) of the radial part (1).

13. A blade according to any one of the preceding claims, **characterised in that,** a segment (15) of the single spar being composed of the radial spar (10) extended by said secondary spar (12), said segment (15) has a length (L2) of between 90% and 95% of the total length (L1) of the blade (P).

14. A blade according to any one of the preceding claims, **characterised in that** said single spar comprises a first, at least partial, reinforcement (13), at the level of the upper surface (8) of the blade (P), between said primary spar (11) and said secondary spar (12).

15. A blade according to Claim 14, **characterised in that** said first reinforcement (13) is made of fabrics formed essentially of unidirectional mineral fibres directed along said pitch axis (A).

16. A blade according to any one of the preceding claims, **characterised in that** said single spar comprises a second, at least partial, reinforcement (14), at the level of the lower surface (7) of the blade (P), between said primary spar (11) and said secondary spar (12).

17. A blade according to Claim 16, **characterised in that** said second reinforcement (14) is made of fabrics formed essentially of unidirectional mineral fibres directed along said pitch axis (A).

18. A blade according to any one of the preceding claims, **characterised in that** the swept-back section (2) comprises in succession a forward swept-back section (2') and a rearward swept-back section (2").

## Patentansprüche

1. Rotorblatt (P) eines Drehflüglers, das nacheinander gemäß einer Blattachse (A) des Rotorblatts (P) vom Fuß (20) des Rotorblatts, der an einer Nabe eines Rotors des Drehflüglers befestigt ist, bis zu einem freien Ende (21) des Rotorblatts (P) auf der der Nabe entgegengesetzten Seite mit einem radialen Abschnitt (1) und dann mit einem gepfeilten Abschnitt (2) ausgestattet ist, wobei der gepfeilte Abschnitt (2) mit mindestens einem vorderen (2') und/oder mit einem hinteren gepfeilten Abschnitt (2") versehen ist, wobei das Rotorblatt (P) außerdem einen einzigen Längsträger aufweist, der vom Fuß des Rotorblatts (20) ausgeht, und der radiale (1) und der gepfeilte Abschnitt (2) je eine Vorderkante (3, 4) und eine Hinterkante (6, 5) sowie eine Oberseite (8) und eine Unterseite (7) haben,
**dadurch gekennzeichnet, dass** der einzige Längsträger einen radialen Längsträger (10) im radialen Abschnitt (1) aufweist und sich dann am Übergang vom radialen Abschnitt (1) zum gepfeilten Abschnitt (2) teilt, um anschließend im gepfeilten Abschnitt (2) einen primären Längsträger (11) und einen sekundären Längsträger (12) zu bilden.

2. Rotorblatt nach Anspruch 1, **dadurch gekennzeichnet, dass** der einzige Längsträger aus undirektionalen Mineralfasern besteht.

3. Rotorblatt nach Anspruch 2, **dadurch gekennzeichnet, dass** der radiale Längsträger und der sekundäre Längsträger undirektionale Mineralfasern aufweisen, die gemäß der Blattachse ausgerichtet sind.

4. Rotorblatt nach einem der Ansprüche 2 bis 3, **dadurch gekennzeichnet, dass** der primäre Längsträger unidirektionale Mineralfasern aufweist, die parallel zur Vorderkante des gepfeilten Abschnitts ausgerichtet sind.

5. Rotorblatt nach einem der vorhergehenden Ansprüche, **dadurch gekennzeichnet, dass** der radiale Längsträger (10) in der Vorderkante (3) des radialen Abschnitts (1) eingerichtet ist.

6. Rotorblatt nach einem der vorhergehenden Ansprüche, **dadurch gekennzeichnet, dass** der primäre Längsträger (11) in der Vorderkante (4) des gepfeilten Abschnitts (2) eingerichtet ist.

7. Rotorblatt nach einem der vorhergehenden Ansprüche, **dadurch gekennzeichnet, dass** der sekundäre Längsträger (12) in einem zentralen Bereich des gepfeilten Abschnitts (2) eingerichtet ist, wobei der zentrale Bereich sich zwischen der Vorderkante (4) und der Hinterkante (5) des gepfeilten Abschnitts (2) befindet.

8. Rotorblatt nach einem der vorhergehenden Ansprüche, **dadurch gekennzeichnet, dass** der sekundäre Längsträger (12) ein längliches Element ist, dessen Höhe sich von der Unterseite (7) zur Oberseite (8) des gepfeilten Abschnitts (2) erstreckt.

9. Rotorblatt nach einem der vorhergehenden Ansprüche, **dadurch gekennzeichnet, dass** der sekundäre Längsträger (12) einen oberen sekundären Längsträger (12') aufweist, der flach auf der Oberseite (8) des gepfeilten Abschnitts (2) angeordnet ist.

10. Rotorblatt nach einem der vorhergehenden Ansprüche, **dadurch gekennzeichnet, dass** der sekundäre Längsträger (12) einen unteren sekundären Längsträger (12") aufweist, der flach auf der Unterseite (7) des gepfeilten Abschnitts (2) angeordnet ist.

11. Rotorblatt nach einem der vorhergehenden Ansprüche, **dadurch gekennzeichnet, dass** der sekundäre Längsträger (12) in Flucht mit dem radialen Längsträger (10) eingerichtet ist.

12. Rotorblatt nach einem der vorhergehenden Ansprüche, **dadurch gekennzeichnet, dass** der sekundäre Längsträger (12) in Flucht mit der Vorderkante (3) des radialen Bereichs (1) eingerichtet ist.

13. Rotorblatt nach einem der vorhergehenden Ansprüche, **dadurch gekennzeichnet, dass,** wenn ein Segment (15) des einzigen Längsträgers aus dem radialen Längsträger (10) verlängert durch den sekundären Längsträger (12) besteht, das Segment (15) eine Länge (L2) hat, die zwischen 90 % und 95 % der Gesamtlänge (L1) des Rotorblatts (P) liegt.

14. Rotorblatt nach einem der vorhergehenden Ansprüche, **dadurch gekennzeichnet, dass** der einzige Längsträger eine erste, zumindest teilweise Verstärkung (13) in Höhe der Oberseite (8) des Rotorblatts (P) zwischen dem primären Längsträger (11) und dem sekundären Längsträger (12) aufweist.

15. Rotorblatt nach Anspruch 14, **dadurch gekennzeichnet, dass** die erste Verstärkung (13) aus Geweben ist, die hauptsächlich aus unidirektionalen Mineralfasern bestehen, welche gemäß der Blattachse (A) ausgerichtet sind.

16. Rotorblatt nach einem der vorhergehenden Ansprüche, **dadurch gekennzeichnet, dass** der einzige Längsträger eine zweite, zumindest teilweise Verstärkung (14) in Höhe der Unterseite (7) des Rotorblatts (P) zwischen dem primären Längsträger (11) und dem sekundären Längsträger (12) aufweist.

17. Rotorblatt nach Anspruch 16, **dadurch gekennzeichnet, dass** die zweite Verstärkung (14) aus Geweben ist, die hauptsächlich aus unidirektionalen Mineralfasern bestehen, welche gemäß der Blattachse (A) ausgerichtet sind.

18. Rotorblatt nach einem der vorhergehenden Ansprüche, **dadurch gekennzeichnet, dass** der gepfeilte Abschnitt (2) nacheinander einen vorderen gepfeilten Abschnitt (2') und einen hinteren gepfeilten Abschnitt (2") aufweist.
